Europäisches Patentamt

European Patent Office

Office européen des brevets

(11) Numéro de publication: **0 277 864**
A2

# (12) DEMANDE DE BREVET EUROPEEN

(21) Numéro de dépôt: **88400124.9**

(22) Date de dépôt: **21.01.88**

(51) Int. Cl.4: **A 23 L 1/322**
**A 23 P 1/08**

(30) Priorité: **30.01.87 FR 8701234**

(43) Date de publication de la demande:
**10.08.88 Bulletin 88/32**

(84) Etats contractants désignés:
**AT BE CH DE ES FR GB GR IT LI LU NL SE**

(71) Demandeur: **OV'ACTION SA**
**BP 52**
**F-62800 Lievin (FR)**

(72) Inventeur: **Huc, Christian**
**53, rue des Augustines**
**F-62000 Arras (FR)**

(74) Mandataire: **Descourtieux, Philippe et al**
**CABINET BEAU de LOMENIE 55 rue d'Amsterdam**
**F-75008 Paris (FR)**

(54) **Procédé de fabrication d'un produit à base d'oeuf à l'état cuit dur et produit obtenu.**

(57) L'invention consiste à fabriquer un produit à base d'oeuf à l'état cuit dur, constitué de plusieurs couches superposées et solidaires, une couche de blanc alternant avec une couche de jaune, de section rectangulaire. Le procédé consiste dans les étapes suivantes :

    a. Alimentation dans $n_1$ moules de coules fraîches de blanc d'oeuf et dans $n_2$ moules de coules fraîches je jaune d'oeuf, la somme $n_1 + n_2$ étant au moins égale à deux et $n_1$ étant soit égal à $n_2$ soit différent de $n_2$ d'une unité.

    b. Pré-cuisson de chaque coule jusqu'à coagulation.

    c. Démoulage.

    d. Superposition des couches coagulées, une couche de jaune étant adjacente à une couche de blanc.

    e. Cuisson des couches superposées , sous légère pression , jusqu'à durcissement.

De préférence le produit fini a la forme d'un cube, et est utilisé comme aliment pour l'apéritif.

Fig. 1

Bundesdruckerei Berlin

**Description**

PROCEDE DE FABRICATION D'UN PRODUIT A BASE D'OEUF A L ETAT CUIT DUR ET PRODUIT OBTENU

La présente invention cocerne la fabrication d'un produit à base d'oeuf, du type dans lequel le blanc et le jaune sont individualisés à l'état cuit dur. Elle concerne un procédé de fabrication et le produit obtenu constitué de plusieurs couches superposées et solidaires, une couche composée essentiellement de jaune alternant avec une couche composée essentiellement de blanc.

On connaît déjà des produits de ce type. En particulier le brevet français No 2.172.904 décrit un produit dans lequel le blanc et le jaune sont en couches superposées, substantiellement planes, et notamment dans lequel une couche de jaune est comprise entre deux couches de blanc, à l'état cuit dur. Cependant, le procédé de fabrication de ce produit connu consiste, après avoir cassé les oeufs, à séparer les jaunes et les blancs en ayant soin de ne pas rompre la membrane vitelline des jaunes, à cuire les jaunes entiers dans leur membrane vitelline, à mettre en forme les jaunes cuits, à cuire le blanc et à le mettre en forme puis à mettre en contact le jaune et le blanc . Ce procédé est très difficile de mise en oeuvre puisqu'il nécessite le maintien du jaune dans la membrane vitelline qui, dans l'oeuf, est la membrane de protection du jaune.

On connaît par le brevet françaisNo 2.292.440 un autre procédé pour un produit à base d'oeuf, mais ayant une forme cylindrique , ayant une partie intérieure cylindrique réalisée avec du jaune d'oeuf durci et une partie extérieure tubulaire entourant la partie intérieure , réalisée avec du blanc d'oeuf durci. Le procédé pour la fabrication de ce produit connu consiste à injecter du blanc d'oeuf dans un moule cylindrique présentant un noyau interne, à pré-coaguler le blanc en le portant à une certaine température, à extraire le noyau interne, à introduire dans la cavité centrale laissée libre par l'extraction du noyau du jaune d'oeuf préchauffé, à terminer la coagulation du blanc et du jaune et à extraire du moule le produit cylindrique obtenu. Ce procédé est exclusif d'une forme cylindrique du produit, il ne convient pas pour un produit à base d'oeuf dans lequel le blanc et le jaune sont en couches planes superposées. De plus la précoagulation du blanc et du jaune sont faites obligatoirement en deux étapes successives.

Or on a trouvé et c'est ce qui fait l'objet de l'invention un procédé de fabrication d'un produit à base d'oeuf à l'état cuit dur constitué de plusieurs couches superposées et solidaires, une couche composée essentiellement de jaune alternant avec une couche composée essentiellement de blanc, toutes les couches ayant approximativement une section de la forme d'un rectangle de même largeur qui pallie les inconvénients constatés. Selon l'invention, le procédé consiste dans les étapes suivantes :

a. Alimentation dans $n_1$ moules de coules fraîches de blanc d'oeuf et dans $n_2$ moules de coules fraîches de jaune d'oeuf, la somme $n_1 + n_2$ étant au moins égale à deux et $n_1$ étant égal à $n_2$ soit différent de $n_2$ d'une unité.

b. Pré-cuisson de chaque coule jusqu'à coagulation.

c. Démoulage.

d. Superposition des couches coagulées, une couche de jaune étant adjacente à une couche de blanc.

e. Cuisson des couches superposées, sous légère pression, jusqu'à durcissement.

L'étape de démoulage intervient après la coagulation des couches séparées de blanc et de jaune, dès que chaque couche individuelle est suffisamment durcie pour être manipulée.

La cohésion du produit est obtenue grâce à la mise en oeuvre des deux étapes successives , de pré-cuisson et de cuisson, cette dernière étant réalisée alors que l'on exerce une légère pression sur les couches superposées. Cette disposition particulière permet grâce à l'interaction des constituants de l'oeuf lors de la cuisson d'assurer un accrochage, entre chaque couche de blanc et de jaune, suffisant pour que le produit forme un ensemble cohérent et non la juxtaposition de couches superposées.

Avantageusement les moules sont identiques et ont une configuration qui, par simple démoulage, permet d'obtenir pour chaque couche la forme de parallélépipède rectangle. Dans le cas où les moules ont une configuration différente, il sera nécessaire de découper le produit, après durcissement complet.

Avantageusement, les quantités de coules alimentées dans les $n_1$ et $n_2$ moules sont identiques , moyennant quoi les différentes couches sont d'égales dimensions.

Des adjuvants sont ajoutés aux coules fraîches et mélangés avant l'alimentation des moules. Ces adjuvants peuvent être du sel, des agents de sapidité, des colorants naturels ou de synthèse.

La précuisson et la cuisson sont obtenues par tout moyen de chauffage approprié, par exemple à l'aide d'un bain marie.

De préférence la pré-cuisson consiste à porter chaque coule à une température de l'ordre de 65°C, et la cuisson consiste à porter les couches superposées à une température de l'ordre de 90°C.

Dans une version préférée de l'invention, le nombre $n_1$ de moules de coules fraîches de blanc d'oeuf est égal à deux et le nombre $n_2$ de moules de coules fraîches de jaune d'oeuf est égal à un. Ainsi le produit obtenu est constitué de trois couches superposées, une couche composée essentiellement de jaune étant comprise entre deux couches composées essentiellement de blanc , formant ainsi une sorte de sandwich.

Le produit obtenu directement par le procédé a une forme allongée qui est fonction de la longueur des moules. Avantageusement pour obtenir le produit fini à la longueur désirée, l'étape de cuisson est suivie d'une étape de découpe à longueur.

Dans la version préférée, citée ci-dessus, la section transversale étant un carré, la longueur de la découpe est égale au côté dudit carré, moyennant quoi le produit se présente sous la forme d'un cube.

Ce mode privilégié est en particulier mis en oeuvre dans l'utilisation qui est faite du produit de l'invention comme aliment pour apéritif. Le cube en question aura par exemple une arête de 17 millimètres. Lors de sa consommation, le cube devra pourvoir être saisi de quelque façon que ce soit ; ainsi les couches doivent être suffisamment solidaires les unes des autres pour que le cube ne se détériore pas si le consommateur saisit par exemple la seule couche supérieure du cube.

L'invention sera mieux comprise grâce à la description qui va être faite d'un exemple de fabrication d'un produit à base d'oeuf selon l'invention.

Le produit 1 à base d'oeuf se présente sous la forme d'un cube et comporte trois couches 2, 3 et 4, d'égales dimensions, ayant chacune la configuration d'un parallèlépipède rectangle. Les couches 2 et 4 sont constituées de blanc d'oeuf à l'état cuit dur, légèrement salé. La couche intermédiaire 3 es constituée de jaune d'oeuf à l'état cuit dur. Les couches respectivement 2 et 3, et 3 et 4, sont solidaires, de telle sorte que lorsque l'on saisit le cube 1 par sa partie supérieure les couches 3 et 4 ne se désolidarisent pas sous l'effet de la pesanteur. L'arête du cube 1 mesure 17 millimètres. Ce produit cubique de petite dimension est particulièrement destiné à être utilisé comme aliment accessoire pour l'apéritif, à côté des biscuits ou cacahuètes. Pour ce faire, chaque cube sera ultérieurement conditonné sous emballage individuel.

La réalisation du produit cubique 1 est obtenue dans les conditions suivantes. On a préalablement séparé, à partir d'oeufs frais, les blancs des jaunes, obtenant ce qu'on appelle les coules fraîches. On a ajouté à la coule de blanc une petite proportion de sel de manière à relever le goût du produit final. On prend un moule 5 ayant la forme d'un parallélépipède rectangle de largeur $l$ (intérieur) 17 millimètres, de hauteur $h$ 10 millimètres et de longueur L (intérieure) 102 millimètres. On dispose dans ce moule 5 de la coule fraîche homogénéisée de blanc jusqu'à ce que la hauteur occupée par la coule dans le moule soit d'environ 6 millimètres. On fait de même dans un deuxième moule avec de la coule de blanc ; et dans un troisième avec de la coule de jaune. On chauffe les trois moules au bain marie, jusqu'à ce que les coules fraîches correspondantes coagulent, c'est-à-dire lorsque la température de la coule atteint environ 65°C. Une fois cette coagulation réalisée, on démoule les trois couches et on les place dans un quatrième moule de même forme que les moules 5 exception faite de la hauteur $h$ qui est de 17 millimètres : la couche de jaune étant entre les deux couches de blanc. On pose sur là couche de blanc placée la plus au dessus du moule une plaque destinée à exercer sur l'ensemble des trois couches une légère pression. On chauffe le moule au bain marie jusqu'à durcissement complet des trois couches superposées, c'est-à-dire lorsque leur température atteint environ 90°C, puis on démoule. A partir du produit démoulé, on obtient six cubes 1 par découpe transversale dudit produit tous les 17 millimètres.

La proportion naturelle d'un oeuf, entre le blanc et le jaune, étant d'un tiers de jaune pour deux tiers de blanc, cette proportion est respectée dans la mise en oeuvre du produit dans l'exemple qui vient d'être décrit. Toutefois la description de l'exemple ci-dessus n'est pas limitative de l'invention. En particulier, par le même procédé de l'invention, on peut obtenir des produits, dont les dimensions, le nombre de couches, la hauteur de chaque couche pourront varier en fonction de l'utilisation concernée.

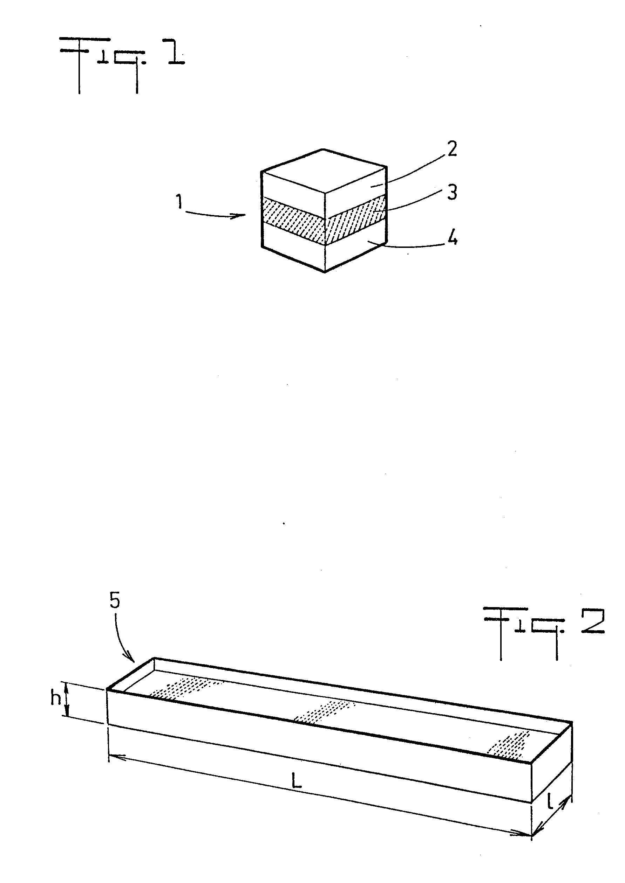

## Revendications

1. Produit de fabrication d'un produit à base d'oeuf constitué de plusieurs couches superposées et solidaires, une couche (3) composée essentiellement de jaune alternant avec une couche (2 ou 4) composée essentiellement de blanc, toutes les couches ayant approximativement une section de la forme d'un rectangle de même largeur ($l$), caractérisé par les étapes suivantes :

    a. Alimentation dans $n_1$ moules de coules fraîches de blanc d'oeuf et dans $n_2$ moules de coules fraîches de jaune d'oeuf, la somme $n_1 + n_2$ étant au moins égale à deux et $n_1$ étant soit égal à $n_2$ soit différent de $n_2$ d'une unité.

    b. Pré-cuisson de chaque coule jusqu'à coagulation.

    c. Démoulage.

    d. Superposition des couches coagulées, une couche de jaune étant adjacente à une couche de blanc.

    e. Cuisson des couches superposées, sous légère pression, jusqu'à durcissement.

2. Procédé selon la revendiction 1 caractérisée en ce que la pré-cuisson consiste à porter chaque coule à une température de l'ordre de 65°C.

3. Procédé selon l'une des revendications 1 et 2 caractérisé en ce que la cuisson consiste à porter les couches superposées à une température de l'ordre de 90°C.

4. Procédé selon l'une des revendications 1 et 3 caractérisé en ce que la quantité de coules alimentées dans les $n_1$ et les $n_2$ moules est identique.

5. Procédé selon l'une des revendications 1 à 4 caractérisé en ce que $n_1$ est égal à deux et $n_2$ est égal à un.

6. Procédé selon l'une des revendications 1 à 5 caractérisé en ce que, pour obtenir le produit à la longueur désirée, la cuisson est suivie d'une découpe à longueur.

7. Produit à base d'oeuf, obtenue selon le procédé de la revendication 1 caractérisé en ce que sa section, transversalement aux couches, est un carré.

8. Produit selon la revendication 7 caractérisé en ce qu'il se présente sous la forme d'un cube.

9. Produit utilisable comme aliment pour apéritif selon la revendication 8 caractérisé en ce qu'il se présente sous la forme d'un cube de 17 millimètres de côté, composé de trois couches superposées, une couche (3) composée essentiellement de jaune étant comprise entre deux couches (2,4) composées essentiellement de blanc.

0277864

Fig. 1

Fig. 2